(19) Europäisches Patentamt
European Patent Office
Office européen des brevets

(11) **EP 2 031 869 A1**

(12) **EUROPEAN PATENT APPLICATION**

(43) Date of publication:
**04.03.2009 Bulletin 2009/10**

(51) Int Cl.:
***H04N 5/335*** (2006.01)     ***H04N 3/15*** (2006.01)

(21) Application number: **07301330.2**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Schemmann, Heinrich**
**78052 Villingen-Schwenningen (DE)**

• **Centen, Petrus Gijsbertus Maria**
**5051 BW Goirle (NL)**
• **Lehr, Steffen**
**78050 Villingen-Schwenningen (DE)**
• **Roth, Sabine**
**78087 Mönchweiler (DE)**

(74) Representative: **Lindemann, Robert**
**Deutsche Thomson OHG**
**European Patent Operations**
**Karl-Wiechert-Allee 74**
**30625 Hannover (DE)**

(54) **Image sensor with vertical scan conversion**

(57) The present invention relates to a video processing device (100). The video processing device (100) comprises an imager (104) having a first group of storage elements (306a, 308a) and a second group of storage elements (306b, 308b), the imager (104) receiving data corresponding to a video image, the imager (104) producing analog video data corresponding to the video image, the analog video data having a first vertical resolution. The imager (104) operates to convert the analog video data having the first vertical resolution (204a, 206a, 208a) to converted analog video data having a second vertical resolution (216a, 218a) by storing a portion of a data value corresponding to a first vertical pixel (204a) of the analog video data having the first vertical resolution on each element in the first group of storage elements (306a, 308a). Further, the imager (104) stores a portion of a data value corresponding to a second vertical pixel (206a) of the analog video data having the first vertical resolution, the second vertical pixel being in a common column with the first vertical pixel, on each element in the second group of storage elements (306b, 308b). Finally, the imager (104) combines at least the portion of the data value stored on at least one element of the first group of storage elements (306a, 308a) with at least the portion of the data value stored on at least one element of the second group of storage elements (306b, 308b) to produce a data value corresponding to a vertical pixel (216a) of converted analog data having the second vertical resolution.

FIG. 3

**Description**

The present invention relates to an image sensor that provides vertical scan conversion from a first vertical scan resolution to a second vertical scan resolution.

There are currently a number of different HDTV formats. An important criteria of each format is the number of active video lines. Common HDTV formats typically require either 720 lines per picture-height (e.g. 1280x720) or 1080 lines per picture-height (e.g. 1920x1080). Cameras having the capability to switch between formats having these two resolutions are of higher value for their owners. The ability to use only one piece of equipment to record images in both resolutions results in higher flexibility, reduces cost and simplifies logistics and planning.

Cameras with the ability to switch recording between 1080 lines and 720 lines are not common today and are only offered on some premium products, which use traditional charge-coupled device (CCD) imager designs. Several alternative approaches for providing an inexpensive multi-mode camera are possible.

One possible approach to providing an inexpensive multi-mode imager is known as a region of interest (ROI) approach. In this approach, control of the image sensor is changed, so that just the center part of the image sensor array is read out and used. The region of interest approach may also be referred to as "cropping" or "digital zoom." An advantage of this approach is that the frame rate can be increased. Disadvantages are that the viewing angle is changed, so that the same lens has more "tele" and less "wide angle." For the same viewing angle and distance to object, the depth of field is increased (which is more a disadvantage). In addition, the lens is unnecessarily large and heavy. Furthermore, there is no increase in performance (e.g., improved signal-to-noise ration (SNR)) when switching to the lower resolution format.

Another possible approach to providing an inexpensive multi-mode imager is known as scan conversion or region of interest in the digital domain. In this approach, images coming from the sensor IC are always of the same format. Vertical scaling is done by digital filters implemented external to the imager. As well, the ROI approach can be done in the digital domain. One disadvantage of this approach is that the frame readout speed of the imager is unchanged (not increased), but the system power dissipation will be higher.

A versatile, inexpensive video camera capable of recording video having either 720 vertical lines of resolution or 1080 vertical lines of resolution is desirable.

Preferably, embodiments of the present invention provide a multi-mode imager (i.e., an imager capable of recording in multiple vertical resolutions) that is adapted to permit non-integer scaling of active pixel sensor (APS) signals in the analog domain. Such an imager may support recording of video data having a vertical resolution of either 1080 vertical lines or 720 vertical lines.

A video processing device that is adapted to operate in accordance with an exemplary embodiment of the present invention is recited in claim 1. The video processing device comprises an imager having a first group of storage elements and a second group of storage elements, the imager receiving data corresponding to a video image, the imager producing analog video data corresponding to the video image, the analog video data having a first vertical resolution. The imager operates to convert the analog video data having the first vertical resolution to converted analog video data having a second vertical resolution by storing a portion of a data value corresponding to a first vertical pixel of the analog video data having the first vertical resolution on each element in the first group of storage elements. Further, the imager stores a portion of a data value corresponding to a second vertical pixel of the analog video data having the first vertical resolution, the second vertical pixel being in a common column with the first vertical pixel, on each element in the second group of storage elements. Finally, the imager combines at least the portion of the data value stored on at least one element of the first group of storage elements with at least the portion of the data value stored on at least one element of the second group of storage elements to produce a data value corresponding to a vertical pixel of converted analog data having the second vertical resolution.

In an exemplary embodiment of the present invention, the portion of the data value stored on at least one element of the first group of storage elements is weighted with a first coefficient and the portion of the data value stored on at least one element of the second group of storage elements is weighted with a second coefficient. In a video processing device according to the invention, the first vertical resolution may be higher than the second vertical resolution. For example, the first vertical resolution may be 1080 vertical lines and the second vertical resolution may be 720 vertical lines. Further, an exemplary embodiment of the invention may comprise an analog-to-digital converter that receives the converted analog video data having a second vertical resolution and creates corresponding digital video data.

A method of processing video data in accordance with the present invention is set forth in claim 6. The method comprises receiving analog video data corresponding to a video image, the analog video data having a first vertical resolution. The method further comprises storing a portion of a data value corresponding to a first vertical pixel of the analog video data having the first vertical resolution on each element in a first group of storage elements and storing a portion of a data value corresponding to a second vertical pixel of the analog video data having the first vertical resolution, the second vertical pixel being in a common column with the first vertical pixel, on each element in a second group of storage elements. Finally; the method comprises combining at least the portion of the data value stored on at least one element of the first group of storage elements with at least the portion of the data value stored on at least one element of the second group of storage elements to produce a data value corresponding to a vertical pixel of converted analog data having a second vertical resolution.

The method of processing video data may additionally comprise weighting the portion of the data value stored on at least one element of the first group of storage elements with a first coefficient and weighting the portion of the data value stored on at least one element of the second group of storage elements with a second coefficient.

In an exemplary method of processing video data, the first vertical resolution is higher than the second vertical resolution. In a particular embodiment, the first vertical resolution comprises 1080 vertical lines and the second vertical resolution comprises 720 vertical lines. Finally, an exemplary method according to the invention may comprise creating digital video data corresponding to the converted analog video data having the second vertical resolution.

In a development of the invention pixels located in lines separated by an integer number of lines are combined in the manner described above. For example, only every third or fourth line is used in the method and circuit described above, skipping the line lying in between.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.

Fig. 1 is a block diagram of a digital video camera system in accordance with an exemplary embodiment of the present invention.

FIG. 2, which comprises FIG. 2a and FIG. 2b, is a diagram showing the combining of pixel data in accordance with exemplary embodiments of the present invention.

FIG. 3 is a schematic diagram of a column readout circuit in accordance with an exemplary embodiment of the present invention.

FIG. 4 is a schematic diagram of an alternative column readout circuit in accordance with an exemplary embodiment of the present invention.

An exemplary embodiment of the present invention performs binning or averaging in the analog domain prior to analog-to-digital conversion of the signals coming from an image sensor. A circuit according to the invention includes storage elements for storing charges coming from the image sensor. In one embodiment, a decimation having a 3/2 ratio, as required for decimating 1080 lines to 720 lines, is achieved by adding portions of the signals of every other line to the respective forgoing and following lines. In other words, the signals of three consecutive input lines are reduced for forming two consecutive output lines without discarding any signal generated on the image sensor.

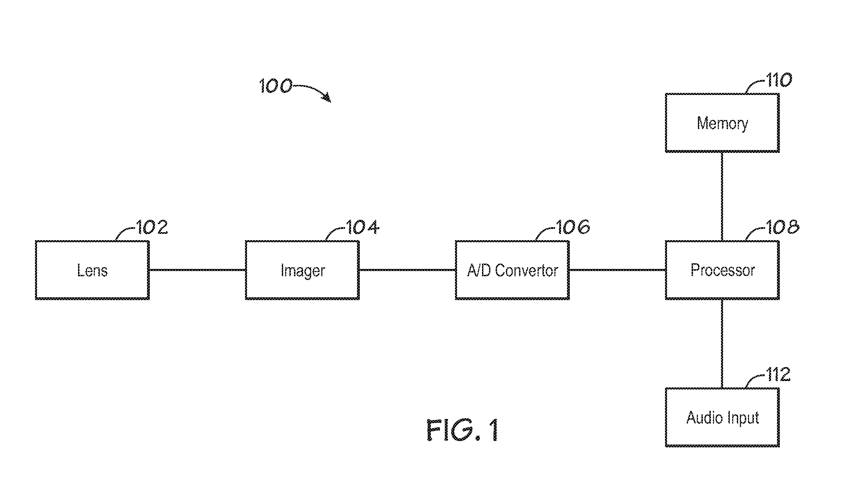

FIG. 1 is a block diagram of a digital video camera system 100 in accordance with an exemplary embodiment of the present invention. The skilled person will appreciate that the camera system 100 may comprise hardware elements (including circuitry), software elements (including computer code stored on a machine-readable medium) or a combination of both hardware and software elements.

The camera system 100 comprises a lens 102 and an imager 104. As set forth in detail below, the imager 104 is adapted to process image data corresponding to images received via the lens 104. The imager 104 delivers processed image data to an analog-to-digital converter 106, which converts the image data into digital format for subsequent processing in the digital domain.

A processor 108 controls the overall operation of the camera system 100. A memory 110 is operably coupled to the processor 108. The skilled person will appreciate that the memory 108 is illustrated as a single block in FIG. 1 for purposes of simplicity. In fact, the memory 110 may comprise volatile memory portions and non-volatile memory portions that each performs different functions. For example, a volatile memory portion of the memory 110 may store computer-readable instructions that cause the processor 108 to control the overall operation of the camera system 100. In addition, a non-volatile memory portion of the memory 110 may store video images recorded by the camera system 100.

The camera system 100 may comprise an audio input 112. The audio input 112 may record audio data that is stored in conjunction with video data recorded by the camera system 100.

An exemplary embodiment of the present invention operates to perform scan conversion inside the imager 104 using analog signal processing. During the line-by-line readout process of the pixel cells, signals from different lines are weighted and added in a column readout circuit. In this manner, a vertical filtering and sampling rate conversion process is implemented.

The skilled person will appreciate the benefits of an exemplary embodiment of the invention, including the improvement of signal-to-noise (SNR) ratio compared to a cropping approach. In addition, the invention exploits the same optics (and optics behavior) for multiple modes of operation (e.g., different resolutions). In an exemplary embodiment, a lower resolution mode allows faster frame readout than a higher resolution mode. Implementation of exemplary embodiments of the invention may be accomplished by making minor changes to the readout path of an imager without changing the pixel cell array. Furthermore, exemplary embodiments may simultaneously implement an interlace mode. Embodiments of the invention are suitable for use in sensor systems that have analog output and no digital processing. Additional vertical scaling modes may be implemented to provide faster frame rates of images with less lines (e.g., slow motion, PAL/NTSC formats). If the analog signal is converted into digital format, it may be desirable to modify the correction of pixel errors (defects, leakage or the like) because the information of different individual pixels has already been combined on the sensor chip.

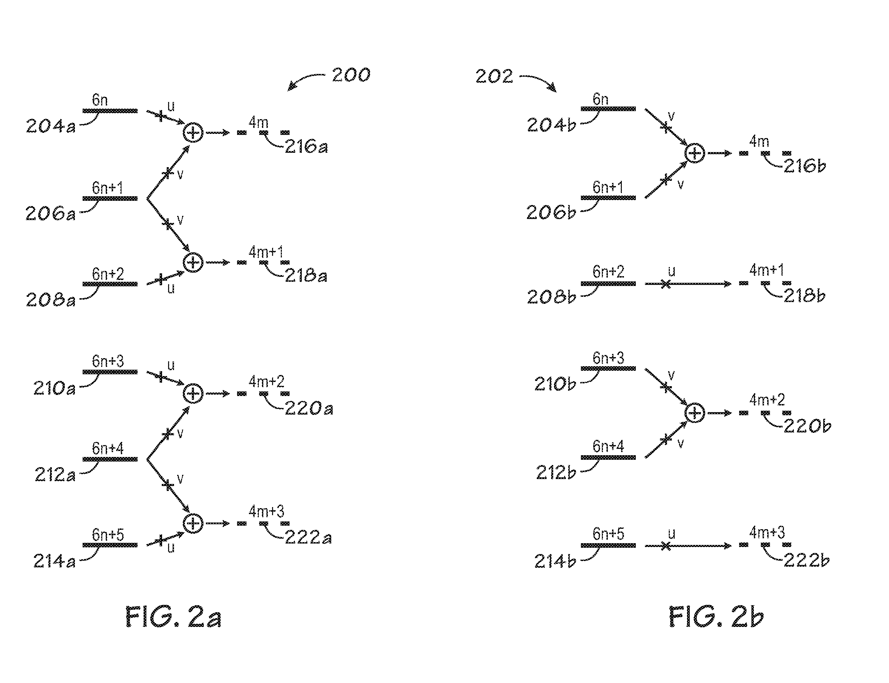

FIG. 2, which comprises FIG. 2a and FIG. 2b, is a diagram showing the combining of pixel data in accordance with two exemplary embodiments of the present invention. FIG. 2a is generally referred to by the reference number 200 and FIG. 2b is generally referred to by the reference number 202. FIG. 2a and FIG. 2b are useful in explaining algorithms for vertical scan conversion in accordance with an exemplary embodiment of the present invention. Moreover, FIG. 2a represents a first algorithm for converting video data by the imager 104 (FIG. 1) from a first vertical resolution to a second vertical resolution and FIG. 2b represents a second algorithm for converting video data by the imager 104 (FIG. 1) from the first vertical resolution to the second vertical resolution.

The left-hand portion of both FIG. 2a and FIG. 2b correspond to vertical video data signals from an exemplary imager 104 (FIG. 1) having a vertical resolution of 1080 lines. Specifically, the left-hand portion of FIG. 2a shows a plurality of input vertical video data signals or lines identified by the reference numbers 204a (6n), 206a (6n+1), 208a (6n+2), 210a (6n+3), 212a (6n+4) and 214a (6n+5). The left-hand portion of FIG. 2b shows a plurality of input vertical video data signals or lines identified by the reference numbers 204b (6n), 206b (6n+1), 208b (6n+2), 210b (6n+3), 212b (6n+4) and 214b (6n+5). As explained below, the original video data lines (204a, 206a, 208a, 210a, 212a and 214a in FIG. 2a and 204b, 206b, 208b, 210b, 212b and 214b in FIG. 2b) having a first resolution (e.g., 1080 vertical lines) are converted into video data having a second resolution (e.g., 720 vertical lines). The right-hand portions of FIG. 2a and FIG. 2b show data signals or lines in the second lower resolution after conversion. Specifically, the right-hand portion of FIG. 2a shows a plurality of output vertical video signals identified by the reference numbers 216a (4m), 218a (4m+1), 220a (4m+2) and 222a (4m+3). The right-hand portion of FIG. 2b shows a plurality of output vertical video signals identified by the reference numbers 216b (4m), 218b (4m+1), 220b (4m+2) and 222b (4m+3).

Both algorithms shown in FIG. 2 (FIG. 2a and FIG. 2b) are useful in the conversion of video data having 1080 vertical lines of resolution to video data having 720 vertical lines. For each image, three lines of the 1080 line grid are converted to two lines in the 720 lines grid as shown. The skilled person will appreciate that bundling the video data in groups of six lines each may improve the ability to implement the invention in circuitry. In an exemplary embodiment, enough groups of six are combined in the vertical direction to provide an imager having a specific desired maximum resolution.

FIG 2a shows a preferred embodiment of the present invention. In FIG. 2a, video data line 216a (4m) is generated by weighting each pixel of data line 204a (6n) with a coefficient u and adding the result to the vertically adjacent pixel of line 206a (6n+1), which has been weighted with a coefficient v. Data line 218a (4m+1) is generated using mirrored coefficient values. Specifically, line 218a (4m+1) is generated by weighting data line 206a with the coefficient v and adding the result to the vertically adjacent pixel of data line 208a (6n+2), which has been weighted with the coefficient u. Lines 220a (4m+2) and 222a (4m+3) are generated from lines 210a (6n+3), 212a (6n+4) and 214a (6n+5) in an analogous manner.

In exemplary embodiments of the present invention according to FIG 2a, examples of choices for the coefficients u and v are shown below:

$$(A) \quad u = 2*v \quad (e.g.\ u=2;\ v=1)$$

or

$$(B) \quad u = 3*v \quad (e.g.\ u=3;\ v=1).$$

In the exemplary embodiment shown in FIG. 2b, the video data line 216b (4m) is generated by weighting the pixel from video line 204b (6n) with the coefficient v and adding the result to the value of the pixel from video data line 206b (6n+1), which has also been weighted with the coefficient v. The video data line 218b (4m+1) is generated by weighting the pixel value from video data line 208b (6n+2) with the coefficient u. Video data lines 220b (4m+2) and 222b (4m+3) are created from the video lines 210b (6n+3), 212b (6n+4) and 214b (6n+5) in an analogous manner.

In an exemplary embodiment of the present invention according to FIG. 2b, the following example values may be used for the coefficients u and v:

$$(C) \quad u=2*v \quad (e.g. \ u=2; \ v=1).$$

As set forth above, the exemplary embodiments shown in FIG. 2a and FIG. 2b may be used to perform a vertical scan conversion from 1080 lines to 720 lines, or more generally, a factor two-thirds (2/3). The skilled person will appreciate that other ratios may be used for other applications.

From signal theory, the sampling rate conversion process of the present invention can be considered as a vertical interpolation by a factor of two (double sample rate in vertical direction), which is implemented by a finite impulse response (FIR) filter at double rate. Subsequently, decimation by three is performed. The example values given above for the coefficients u and v describe short FIR filters. Filters of more coefficients (involving the contents of more lines for calculation) could potentially provide better performance, but are likely to result in an undesirable increase in design and implementation complexity.

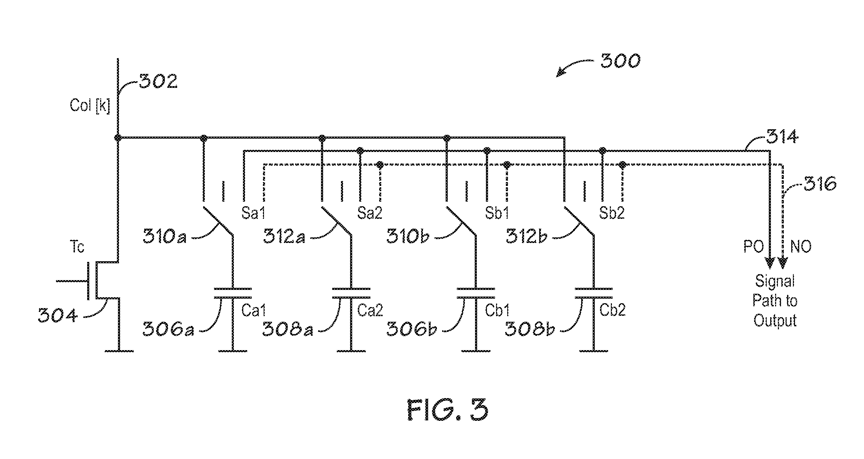

An exemplary embodiment of the present invention exploits the fact that many image sensors employ analog double sampling by using two storage elements per pixel to store image data. In such systems, a first storage element stores an exposed signal value while a second storage element stores a dark signal value taken immediately after reset. Such imagers typically subtract the exposed signal value from the dark signal value to obtain an analog double sampled value. In contrast, an exemplary embodiment of the present invention employs the two storage elements to perform vertical scan conversion rather than analog double sampling. Analog double sampling may be performed external to the image sensor in an exemplary embodiment of the invention. The use of two storage elements per pixel in an imager to perform vertical scan conversion in accordance with an exemplary embodiment of the present invention is explained below with reference to FIG. 3.

FIG. 3 is a schematic diagram of a column readout circuit in accordance with an exemplary embodiment of the present invention. The column readout circuit illustrated in FIG. 3 is generally referred to by the reference number 300. The column readout circuit 300, which may be implemented as a portion of the imager 104 (FIG. 1) is designed to successively read out pixel values for one column of image data processed by the imager 104 (FIG. 1). The image data for each row of the column is successively delivered to a common column output line 302 (Col[k]). Successive pixel values are applied to the common column output line 302 (Col[k]) by successively activating a select line (not shown) associated with each row of data. A transistor 304 acts as a current source.

In the exemplary embodiment shown in FIG. 3, voltage values corresponding to successive pixel values (i.e., pixel values that are adjacent to each other in a column) are read into two groups of two storage elements. In the exemplary embodiment illustrated in FIG. 3, the storage elements comprise capacitors. The skilled person will appreciate, however, that any suitable storage element may be employed. Examples of other types of storage elements that may be used depending on system design considerations include regions of semiconductor devices that are capable of storing charges, such a P/N junction, a doped silicon region or the like. In the exemplary embodiment illustrated in FIG. 3, the values of each of the two capacitors of each group may be chosen so that each capacitor stores half of the total voltage value for a given pixel. For example, a first capacitor 306a (Ca1) and a second capacitor 308a (Ca2) each store half of a pixel value for a first row of a given column. A first capacitor 306b (Cb1) and a second capacitor 308b (Cb2) each store half of a pixel value for a second row of the given column, the second row being adjacent to the first row.

The column readout circuit 300 includes a plurality of switches 310a (Sa1), 312a (Sa2), 310b (Sb1) and 312b (Sb2), which are respectively coupled to the capacitors 306a (Ca1), 308a (Ca2), 306b (Cb1) and 308b (Cb2). The capacitors 306a (Ca1), 308a (Ca2), 306b (Cb1) and 308b (Cb2) are charged with data values when the switches 310a (Sa1), 312a (Sa2), 310b (Sb1) and 312b (Sb2) are in a first position. The switches 310a (Sa1), 312a (Sa2), 310b (Sb1) and 312b (Sb2) are depicted in the first position in FIG. 3. After the capacitors 306a (Ca1), 308a (Ca2), 306b (Cb1) and 308b (Cb2) are charged, they are coupled to a first data output 314 (Po) when the switches 310a (Sa1), 312a (Sa2), 310b (Sb1) and 312b (Sb2) are in a second position or to a second data output 316 when the switches 310a (Sa1), 312a (Sa2), 310b (Sb1) and 312b (Sb2) are in a third position.

The following table (Table 1) is useful in explaining the operation of an exemplary embodiment of the present invention:

Table 1

|   | Pixel Readout | Signal Output |
|---|---|---|
| 0 | Read row 6n to Cb | |
| 1 | Read row 6n +1 to Ca | Cb + Ca/2 |
| 2 | Read row 6n +2 to Cb | Ca/2 + Cb |

(continued)

|   | Pixel Readout | Signal Output |
|---|---|---|
| 3 | Read row 6n +3 to Ca | |
| 4 | Read row 6n +4 to Cb | Ca+Cb/2 |
| 5 | Read row 6n +5 to Ca | Cb/2+Ca |

The following example explains the vertical resolution scan conversion of video data from 1080 vertical lines to 720 vertical lines in conjunction with the algorithm set forth in FIG. 2a and the associated text above. During the first line readout (illustrated in Row 0 of Table 1), data line 204a (6n) (FIG. 2a) is read and the signal voltage stored on the capacitors 306b (Cb1) and 308b (Cb2), which correspond to two halves of a hypothetical capacitor Cb. At this point, the hypothetical capacitor Cb may be thought of as storing the total pixel voltage value associated with the output data from data line 204a (6n). During the next line readout (illustrated in Row 1 of Table 1), the signal voltage of data line 206a (6n+1) (FIG. 2a) is read and stored on the capacitors 306a (Ca1) and 308a (Ca2), which correspond to two halves of a hypothetical capacitor Ca. At this point, the hypothetical capacitor Ca may be thought of as storing the total pixel voltage value associated with the output data from the data line 206a (6n+1).

Thereafter, the voltage value stored on the capacitor 306a (Ca1) (which is one half of the value of the hypothetical capacitor Ca) is connected to the first data output 314 (Po), along with the voltage values from both the capacitor 306b (Cb1) and the capacitor 308b (Cb2) (which correspond to the entire value of the hypothetical capacitor Cb). This implements a weighting with a 1:2 ratio, since the charges are added on a combined capacitor. The resulting voltage is routed via the first data output 314 (Po) for further processing.

During the readout phase two (illustrated in Row 2 of Table 1), data line 208a (6n+2) (FIG. 2a) is read and the signal voltage is stored on the capacitors 306b (Cb1) and 308b (Cb2) (the two halves of Cb). The capacitor 308a (Ca2) still has one half of the charge from the previous line readout and this charge can be used to implement a 1:2 weighting of the lines.

During the readout phase three (illustrated in Row 3 of Table 1), the value of the data line 210a (6n+3) is read and half of the value is stored on each of the capacitors 306a (Ca1) and 308a (Ca2). In readout phase four (illustrated in Row 4 of Table 1), the value of the data line 212a (6n+4) is read and half of the value is stored on each of the capacitors 306b (Cb1) and 308b (Cb2). Thereafter, the capacitors 306a (Ca1), 308a (Ca2) and 306b (Cb1) are connected respectively via the switches 310a (Sa1), 312a (Sa2) and 31 0b (Sb1) to the same data output (either the first data output 314 (Po) or the second data output 316 (No) for further processing.

During the readout phase five (illustrated in Row 5 of Table 1), the value of the data line 214a (6n+5) is read and half of the value is stored on each of the capacitors 306a (Ca1) and 308a (Ca2). Thereafter, the capacitors 306a (Ca1), 308a (Ca2) and 308b (Cb2) are connected respectively via the switches 310a (Sa1), 312a (Sa2) and 312b (Sb2) to the same data output (either the first data output 314 (Po) or the second data output 316 (No)) for further processing.

The skilled person will appreciate that the above example discussed with respect to Table 1, FIG. 2a and FIG. 3 realizes a vertical scan conversion algorithm with coefficients u=2v. Further, the skilled person will appreciate that an imager 104 (FIG. 1) that incorporates the column readout circuit 300 may be adapted to operate in multiple resolution modes. Specifically, when operating in a high resolution mode (e.g., 1080 vertical lines), data is taken directly from the data lines 204a (6n), 206a (6n+1), 208a (6n+2), 210a (6n+3), 212a (6n+4) and 214a (6n+5) without further processing. The scan rate conversion described above is applied when the imager 104 (FIG. 1) is operating in a lower resolution mode to converting image data to a lower vertical scan resolution (e.g., 720 vertical lines).

As is evident from the discussion above, an output signal corresponding to video data is generated during every two of three readout lines (Row 1 and Row 2 for the first three lines, then Row 4 and Row 5 for the next three lines). In order to make best use of the capacity of the analog-to-digital converter 106 (FIG. 1), it should be possible to make two pixel row readouts during one line period of process and output.

The skilled person will appreciate that the column readout circuit 300 may be adapted to implement scan rate conversion in which the coefficients u and v described above with reference to FIG. 2 follow the formula u=3v by changing the value of the storage capacitors 306a (Ca1), 308a (Ca2), 306b (Cb1) and 308b (Cb2). In particular, appropriate values for the capacitors 306a (Ca1) and 308a (Ca2) may be chosen so that the capacitors 306a (Ca1) and 306b (Ca2) each store one-third of the total pixel voltage value and the capacitors 306b (Cb1) and 308b (Cb2) each store two-thirds of the total pixel voltage value. With these values for the storage capacitors, the column readout circuit 300 will operate to perform vertical scan conversion according to the formula u=3v. Table 2 shows a specifc example of vertical scan conversion using those coefficients:

Table 2

| Ca1=C/3 | Ca2=2*C/3 | Cb1=C/3 | Cb2=2*C/3 | Result |
|---|---|---|---|---|
| 1 | 1 | 0 | 0 | P1 |
| 0 | 0 | 1 | 1 | P2 |
| 1 | 1 | 1 | 1 | (1*P1+1*P2)/2 |
| 0 | 1 | 1 | 0 | (2*P1+1*P2)/3 |
| 1 | 0 | 0 | 1 | (1*P1+2*P2)/3 |
| 1 | 1 | 1 | 0 | (3*P1+1*P2)/4 |
| 1 | 0 | 1 | 1 | (1*P1+3*P2)/4 |
| 0 | 1 | 1 | 1 | (2*P1+3*P2)/5 |
| 1 | 1 | 0 | 1 | (3*P2+2*P1)/5 |

In an exemplary embodiment of the invention constructed according to Table 2, a first pixel value P1 is always stored on the capacitors 306a (Ca1) and 308a (Ca2). A second pixel value P2 is stored on the capacitors 306b (Cb1) and 308b (Cb2). The skilled person will appreciate that different weighting factors can be achieved by operating the switches in different ways and combining the charges during the read out.

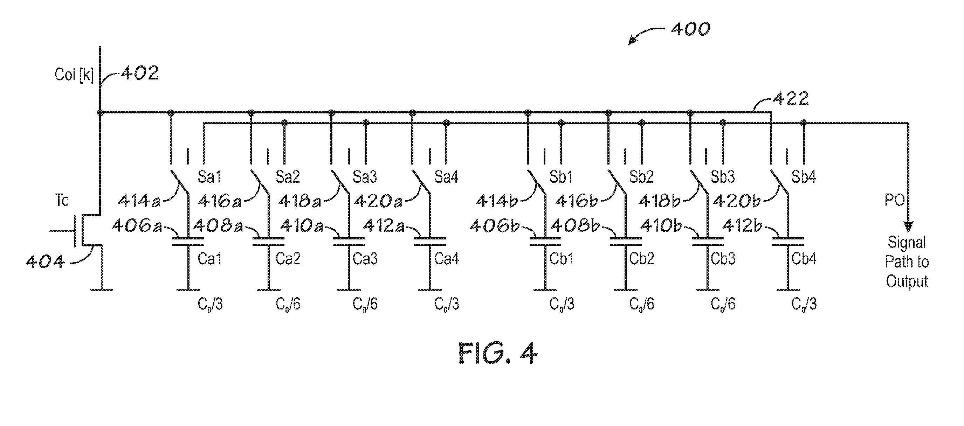

FIG. 4 is a schematic diagram of an alternative column readout circuit in accordance with an exemplary embodiment of the present invention. The column readout circuit is generally referred to by the reference number 400.

The column readout circuit 400 is designed to successively read out pixel values for one column of image data processed by the imager 104 (FIG. 1). The image data for each row of the column is successively delivered to a common column output line 402 (Col[k]). Successive pixel values are applied to the common column output line 402 (Col[k]) by successively activating a select line (not shown) associated with each row of data. A transistor 404 acts as a current source.

The column readout circuit 400 allows a wide range of selection of the coefficients u and v described. As an example, the switches of the column readout circuit 400 may be manipulated in such a manner to cause the imager 104 (FIG. 1) to perform vertical scan conversion according to either the formula u=3v or the formula u=2v. In the exemplary embodiment shown in FIG. 4, voltage values corresponding to successive pixel values (i.e., pixel values that are adjacent to each other in a column) are read into two groups of four storage elements. In the exemplary embodiment illustrated in FIG. 4, the storage elements comprise capacitors. The skilled person will appreciate, however, that any suitable storage element may be employed. Examples of other types of storage elements that may be used depending on system design considerations include regions of semiconductor devices that are capable of storing charges, such a P/N junction, a doped silicon region or the like.

In the exemplary embodiment illustrated in FIG. 4, each of the four capacitors of each group may be thought of as storing a fraction of the total voltage value. In FIG. 4, a first capacitor 406a (Ca1) stores one-third of the total voltage value of a first pixel P1, a second capacitor 408a (Ca2) stores one-sixth of the total value, a third capacitor 410a (Ca3) stores one-sixth of the total value and a fourth capacitor 412a (Ca4) stores one-third of the total voltage value. Likewise, a first capacitor 406b (Cb1) stores one-third of the total voltage value of a second pixel P2 adjacent to P1, a second capacitor 408b (Cb2) stores one-sixth of the total value, a third capacitor 410b (Cb3) stores one-sixth of the total value and a fourth capacitor 412b (Cb4) stores one-third of the total voltage value. The capacitors 406a (Ca1), 408a (Ca2), 410a (Ca3), 412a (Ca4), 406b (Cb1), 408b (Cb2), 410b (Cb3) and 412b (Cb4) are respectively connected to a plurality of switches 414a (Sa1), 416a (Sa2), 418a (Sa3), 420a (Sa4), 414b (Sb1), 416b (Sb2), 418b (Sb3) and 420b (Sb4). The switches 414a (Sa1), 416a (Sa2), 418a (Sa3), 420a (Sa4), 414b (Sb1), 416b (Sb2), 418b (Sb3) and 420b (Sb4) may be manipulated in various combinations to connect the voltages stored by their associated capacitors to a data output line 422 (Po).

An exemplary embodiment of the invention allows the implementation of an interlace mode that employs line addition. Such an implementation uses weighting coefficients u and v such that u=v. Interlacing is accomplished by adding two vertically adjacent lines before delivering the output to a data output line. The operation in interlace mode is summarized in Table 3 below:

Table 3

| Pixel Readout | Signal Output |
|---|---|
| Read row 2n to Cb | |

(continued)

| Pixel Readout | Signal Output |
|---|---|
| Read row 2n +1 to Ca | Process & Output Cb + Ca |

The skilled person will appreciate that the lines 2n and 2n+1 are added: e.g., 2+3, 4+5, 6+7, etc. to generate the odd field. Further, the even field is generated by adding the lines 2n+1 and 2n+2 are added: e.g. 1+2, 3+4, 5+6, 7+8, etc. Thus, pixel data is shifted vertically by one line in terms of n in every other frame.

In an exemplary embodiment of the present invention, the above-described interlace mode may be implemented in an imager 104 (FIG. 1) that is also capable of performing analog double sampling. The operation of an implementation that uses of analog double sampling in conjunction with interlace mode is summarized below in Table 4:

Table 4

| Pixel Readout | Signal Output |
|---|---|
| Sample row 2n Bright signal to Ca1 | |
| Sample row 2n Dark signal to Cb1 | |
| Sample row 2n +1 Bright to Ca2 | |
| Sample row 2n+1 Dark signal to Cb2 | Process & Output (Ca1 + Ca2) - (Cb1 + Cb2) |

The skilled person will appreciate that the subtraction part of the formula in Signal Output column of Table 4 may be performed by a differential amplifier further down the signal path.

The skilled person will appreciate that interpolation algorithms illustrated in FIG. 2b may be implemented using the column readout circuit 300 (FIG. 3) or the column readout circuit 400 (FIG. 4). The operation sequence is similar to the above interlace scheme. Such an implementation exploits the advantage that every second output line still represents the original pixel values, which could ease defect detection. Such an implementation, however, may suffer reduced quality filter performance in terms of alias reduction.

As an option, this strategy could be implemented in an interlace-like fashion, by shifting it vertically by one line in every other field. This allows having direct access to all pixel values within a sequence of two fields. In operation, (A) either two lines of the pixel array are read, added and sent to the output, or (B) in the other case, one line is directly output.

As a further option, a timing control should be adapted to foresee two row readout processes for delivering on video line at the output. So, for case (B) the same timing could be used, and the one desired row of pixels could be read twice. The two signal values could be added afterwards. The averaging will reduce readout noise. Also, the same timing for cases (A) and (B) has less lack of symmetry and reduces potential line-pairing artifacts.

As set forth above, an exemplary embodiment of the present invention need not perform on-chip analog double sampling. However, if it is desired to perform on-chip analog double sampling, both functions (e.g., vertical scan conversion and on-chip analog double sampling) could be implemented together by doubling the column capacitors. Doubling would be in terms of number first, but could also increase the total capacitance, which implies a larger silicon area. Exemplary embodiments of the present invention that employ capacitor doubling provide the benefit that, when scan conversion mode is not being performed, capacitors of double size are available for use in normal operation. This improves the signal to noise ratio due to reduced signal attenuation by charge distribution and due to averaging out kT/C noise components.

The skilled person will appreciate that combining any of the above-recited features of the present invention together may be desirable depending on particular system design parameters.

**Claims**

1. A video processing device (100), comprising:

- an imager (104) having a first group of storage elements (306a, 308a) and a second group of storage elements (306b, 308b), the imager (104) receiving data corresponding to a video image, the imager (104) producing analog video data corresponding to the video image, the analog video data having a first vertical resolution, the imager (104) operating to convert the analog video data having the first vertical resolution (204a, 206a, 208a) to converted analog video data having a second vertical resolution (216a, 218a) by storing a portion of a data value corresponding to a first vertical pixel (204a) of the analog video data having the first vertical resolution on each element in the first group of storage elements (306a, 308a) and by storing a portion of a data value corresponding to a second vertical pixel (206a) of the analog video data having the first vertical resolution, the second vertical pixel being in a common column with the first vertical pixel, on each element in the second group of storage elements (306b, 308b), and by combining at least the portion of the data value stored on at least one element of the first group of storage elements (306a, 308a) with at least the portion of the data value stored on at least one element of the second group of storage elements (306b, 308b) to produce a data value corresponding to a vertical pixel (216a) of converted analog data having the second vertical resolution.

2. The video processing device (100) according to claim 1, wherein the portion of the data value stored on at least one element of the first group of storage elements (306a, 308a) is weighted with a first coefficient and the portion of the data value stored on at least one element of the second group of storage elements (306b, 308b) is weighted with a second coefficient.

3. The video processing device (100) according to claim 1 or 2, wherein first vertical pixel is separated from the second vertical pixel by n-pixels in the common column, n being an integer number.

4. The video processing device (100) according to any one of claims 1 to 3, wherein the first vertical resolution comprises 1080 vertical lines and the second vertical resolution comprises 720 vertical lines.

5. The video processing device (100) according to any one of claims 1 to 4, comprising an analog-to-digital converter (106) that receives the converted analog video data having a second vertical resolution and creates corresponding digital video data.

6. A method of processing video data, the method comprising:

   - receiving analog video data corresponding to a video image, the analog video data having a first vertical resolution;
   - storing a portion of a data value corresponding to a first vertical pixel (204a) of the analog video data having the first vertical resolution on each element in a first group of storage elements (306a, 308a);
   - storing a portion of a data value corresponding to a second vertical pixel (206a) of the analog video data having the first vertical resolution, the second vertical pixel being in a common column with the first vertical pixel, on each element in a second group of storage elements (306b, 308b); and
   - combining at least the portion of the data value stored on at least one element of the first group of storage elements (306a, 308a) with at least the portion of the data value stored on at least one element of the second group of storage elements (306b, 308b) to produce a data value corresponding to a vertical pixel (216a) of converted analog data having a second vertical resolution.

7. Method of processing video data according to claim 6, comprising the steps of:

   - weighting the portion of the data value stored on at least one element of the first group of storage elements (306a, 308a) with a first coefficient; and
   - weighting the portion of the data value stored on at least one element of the second group of storage elements (306b, 308b) with a second coefficient.

8. Method of processing video data according to claims 6 or 7, wherein first vertical pixel is separated from the second vertical pixel by n-pixels in the common column, n being an integer number.

9. Method of processing video data according to any one of claims 6 to 8, wherein the first vertical resolution comprises 1080 vertical lines and the second vertical resolution comprises 720 vertical lines.

10. Method of processing video data according to any one of claims 6 to 9, comprising the step of:

   - creating digital video data corresponding to the converted analog video data having the second vertical resolution.

EP 2 031 869 A1

100⟋

```
┌─────────┐      ┌─────────┐      ┌──────────────┐      ┌─────────────┐
│  Lens   │──────│  Imager │──────│ A/D Convertor│──────│  Processor  │
└─────────┘      └─────────┘      └──────────────┘      └─────────────┘
   102              104                 106          │        108
                                                     │
                                              ┌─────────────┐
                                              │   Memory    │ 110
                                              └─────────────┘
                                              ┌─────────────┐
                                              │ Audio Input │ 112
                                              └─────────────┘
```

FIG. 1

FIG. 2a

FIG. 2b

EP 2 031 869 A1

FIG. 3

FIG. 4

EP 2 031 869 A1

**European Patent Office**

**EUROPEAN SEARCH REPORT**

Application Number

EP 07 30 1330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/103977 A1 (KRYMSKI ALEXANDER [US]) 19 May 2005 (2005-05-19) * page 2, paragraph 30 - page 4, paragraph 50; figures 1-10 * ----- | 1-10 | INV. H04N5/335 H04N3/15 |
| X | US 2002/154347 A1 (FUNAKOSHI JUN [JP] ET AL) 24 October 2002 (2002-10-24) * page 5, paragraph 64 - paragraph 69; figures 8,9 * ----- | 1-10 | |
| X | EP 1 484 912 A (OMNIVISION TECH INC [US]) 8 December 2004 (2004-12-08) * column 2, line 44 - column 4, line 45; figures 1,2 * ----- | 1,6 | |
| A | WO 99/56467 A (STAPLETON JOHN J [US]) 4 November 1999 (1999-11-04) * page 4, line 17 - page 5, line 4; figure 1 * ----- | 1-10 | |
| | | | TECHNICAL FIELDS SEARCHED (IPC) |
| | | | H04N |

The present search report has been drawn up for all claims

| Place of search | Date of completion of the search | Examiner |
|---|---|---|
| Munich | 10 January 2008 | Schinnerl, Arnold |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 30 1330

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2008

| Patent document cited in search report | | Publication date | Patent family member(s) | | Publication date |
|---|---|---|---|---|---|
| US 2005103977 | A1 | 19-05-2005 | CN | 1902903 A | 24-01-2007 |
| | | | EP | 1687970 A1 | 09-08-2006 |
| | | | JP | 2007515869 T | 14-06-2007 |
| | | | KR | 20060101531 A | 25-09-2006 |
| | | | TW | 251439 B | 11-03-2006 |
| | | | US | 2007063128 A1 | 22-03-2007 |
| | | | WO | 2005050977 A1 | 02-06-2005 |
| US 2002154347 | A1 | 24-10-2002 | JP | 2002320235 A | 31-10-2002 |
| | | | KR | 20020082734 A | 31-10-2002 |
| | | | TW | 556431 B | 01-10-2003 |
| EP 1484912 | A | 08-12-2004 | CN | 1591893 A | 09-03-2005 |
| | | | US | 2004246354 A1 | 09-12-2004 |
| WO 9956467 | A | 04-11-1999 | AU | 3766099 A | 16-11-1999 |
| | | | US | 6124893 A | 26-09-2000 |
| | | | US | 6489997 B1 | 03-12-2002 |

EPO FORM P0459

For more details about this annex : see Official Journal of the European Patent Office, No. 12/82